# EUROPÄISCHE PATENTSCHRIFT

(11) **EP 1 051 672 B1**
(45) Veröffentlichungstag und Bekanntmachung des Hinweises auf die Patenterteilung: **17.04.2002**
(21) Anmeldenummer: 99902540.6
(22) Anmeldetag: 15.01.1999
(51) Int. Cl.: G05D 21/02

(54) **AUTOMATISCHE KONTROLLE UND STEUERUNG VON REINIGERBÄDERN DURCH ALKALITÄTSBESTIMMUNG**
AUTOMATIC COMMAND AND CONTROL OF CLEANSING BATHS BY MEANS OF ALKALINITY REGULATION
CONTROLE ET COMMANDE AUTOMATIQUES DE BAINS DE NETTOYAGE PAR DOSAGE D'ALCALINITE

(30) Priorität: 24.01.1998 DE 19802725
(43) Veröffentlichungstag der Anmeldung: 15.11.2000
(73) Patentinhaber: Henkel Kommanditgesellschaft auf Aktien, 40589 Düsseldorf (DE)
(72) Erfinder: OPITZ, Werner, D-40764 Langenfeld (DE); BÜTFERING, Ludger, D-50939 Köln (DE); KLING, Hans-Willi, D-42277 Wuppertal (DE); BARTIK-HIMMLER, Ibolya, D-51519 Odenthal (DE); KREY, Wolfgang, D-42113 Wuppertal (DE); NAWRATH, Stefan, D-47877 Willich (DE)
(86) Internationale Anmeldenummer: EP9900198
(87) Internationale Veröffentlichungsnummer: WO9938058

(56) Entgegenhaltungen:
- FR-A- 2 250 116
- US-A- 3 674 672
- US-A- 4 374 681
- US-A- 4 749 552
- US-A- 4 886 590

## Beschreibung

Die Erfindung betrifft ein Verfahren zur automatischen Kontrolle und Steuerung von Reinigerbäder, wobei als Meß- und Steuerparameter die freie und/oder die Gesamtalkalität des Reinigerbads bestimmt und erforderlichenfalls durch Dosiermaßnahmen nachgestellt wird. Das Verfahren ist insbesondere für technische Reinigerbäder in der metallverarbeitenden Industrie wie beispielsweise dem Automobilbau konzipiert. Es ermöglicht, die durch den Parameter "Alkalität" charakterisierte Funktionsfähigkeit des Reinigerbades automatisch zu überwachen und erforderlichenfalls automatisch oder durch externe Anforderung das Reinigerbad zu ergänzen oder sonstige Badpflegemaßnahmen einzuleiten. Das Verfahren ist insbesondere so konzipiert, daß die Ergebnisse der Bestimmungen an einen vom Reinigerbad entfernten Ort übermittelt werden. Außerdem kann von einem vom Reinigerbad entfernten Ort aus in den automatischen Meßablauf eingegriffen werden oder die Nachdosierung oder sonstige Badpflegemaßnahmen angestoßen werden. Der "von dem Reinigerbad entfernte Ort" kann beispielsweise in einem übergeordneten Prozeßleitsystem, in einer Leitzentrale des Werkes, in dem sich das Reinigerbad befindet, oder auch an einer Stelle außerhalb des Werkes liegen.

Die Reinigung von Metallteilen vor ihrer Weiterverarbeitung stellt eine Standardaufgabe in der metallverarbeitenden Industrie dar. Die Metallteile können beispielsweise mit Pigmentschmutz. Staub, Metallabrieb, Korrosionsschutzölen, Kühlschmierstoffen oder Umformhilfsmitteln verschmutzt sein. Vor der Weiterverarbeitung, wie insbesondere vor einer Korrosionsschutzbehandlung (z.B.

Phosphatierung, Chromatierung, Anodisierung, Reaktion mit komplexen Fluoriden usw.) oder vor einer Lackierung müssen diese Verunreinigungen durch eine geeignete Reinigerlösung entfernt werden. Hierfür kommen Spritz-, Tauch- oder kombinierte Verfahren in Frage.

Industrielle Reiniger in der metallverarbeitenden Industrie sind in der Regel alkalisch (pH-Werte im Bereich oberhalb von 7, beispielsweise 9 bis 12). Ihre Grundbestandteile sind Alkalien (Alkalimetallhydroxide, -carbonate, -silicate, - phosphate, -borate) sowie nichtionische und/oder anionische Tenside. Häufig enthalten die Reiniger als zusätzliche Hilfskomponenten Komplexbildner (Gluconate, Polyphosphate, Salze von Aminocarbonsäuren wie beispielsweise Ethylendiamintetraacetat oder Nitrilotriacetat, Salze von Phosphonsäuren wie beispielsweise Salze von Hydroxyethandiphosphonsäure, Phosphonobutantricarbonsäure, oder andere Phosphon- oder Phosphonocarbonsäuren), Korrosionsschutzmittel wie beispielsweise Salze von Carbonsäuren mit 6 bis 12 C-Atomen, Alkanolamine und Schauminhibitoren wie beispielsweise endgruppenverschlossene Alkoxylate von Alkoholen mit 6 bis 16 C-Atomen im Alkylrest. Sofern die Reinigerbäder keine anionischen Tenside enthalten; können auch kationische Tenside eingesetzt werden.

Als nichtionische Tenside enthalten die Reiniger in der Regel Ethoxylate, Propoxylate und/oder Ethoxylate/Propoxylate von Alkoholen oder Alkylaminen mit 6 bis 16 C-Atomen im Alkylrest, die auch endgruppenverschlossen sein können. Als anionische Tenside sind Alkylsulfate und Alkylsulfonate weit verbreitet. Auch Alkylbenzolsulfonate sind noch anzutreffen, aus Umweltgesichtspunkten jedoch nachteilig. Als kationische Tenside kommen insbesondere kationische Alkylammoniumverbindungen mit mindestens einem Alkylrest mit 8 oder mehr C-Atomen in Frage.

Die Alkalien im Reinigerbad tragen zu dessen Reinigungsvermögen bei. Beispielsweise verseifen sie verseifbare Verunreinigungen wie beispielsweise Fette und machen diese hierdurch wasserlöslich. Außerdem tragen sie zum Ablösen unlöslicher Schmutzteile von der Metalloberfläche bei, indem sie die Oberflächen durch Adsorption von OH-Ionen negativ aufladen und hierdurch eine elektrostatische Abstoßung bewirken. Durch derartige Reaktionen, ggf. auch durch Ausschleppung, wird Alkalität verbraucht, so daß die Reinigungswirkung mit der Zeit nachläßt. Daher ist es üblich, die Alkalität der Reinigungsbäder zu bestimmten Zeiten zu überprüfen und erforderlichenfalls die Lösung mit neuen Wirkstoffen zu ergänzen oder ganz zu erneuern. Diese Überprüfung erfolgt entweder manuell oder lokal durch einen Titrierautomaten. Dabei überprüft man die Alkalität in der Regel durch Titration mit einer starken Säure. Das Bedienungspersonal beurteilt die Alkalität anhand des Säureverbrauchs und ergreift die erforderlichen Maßnahmen wie beispielsweise Badergänzung oder Baderneuerung. Dieses derzeit übliche Verfahren setzt voraus, daß sich zu den erforderlichen Kontrollzeiten Bedienungspersonal in der Nähe des Reinigungsbades aufhält. Je kürzere Kontrollintervalle erwünscht werden, desto stärker wird das Bedienungspersonal für die Kontrollmessungen beansprucht.

Aus der EP-A-806 244 ist ein Verfahren bekannt, den pH-Wert einer Lösung automatisch zu bestimmen und bei Abweichungen automatisch Säure oder Lauge nachzudosieren. Die Aufgabe in diesem Dokument besteht darin, den pH-Wert eines Flüssigkeitsstromes auf einem vorbestimmten Wert zu halten. Eine Säure-Base-Titration erfolgt bei diesem Verfahren nicht. Dabei ist es erforderlich, diese Anlage vor Ort auf Funktionsfähigkeit zu kontrollieren. Es ist nicht möglich, von einem entfernten Ort in den Ablauf der pH-Messungen und der Dosiermaßnahmen einzugreifen.

Die Erfindung stellt sich demgegenüber die Aufgabe, die Kontrolle von Reinigerbäder durch Alkalitätsbestimmung derart zu automatisieren und zu dokumentieren, daß zumindest die Ergebnisse der Alkalitätsbestimmung auf einem Datenträger gespeichert und/oder ausgegeben werden. Vorzugsweise soll sich die eingesetzte Meßeinrichtung selbst überprüfen und kalibrieren und bei Fehlfunktion eine Alarmmeldung an eine entfernte Stelle übermitteln. Weiterhin soll es vorzugsweise möglich sein, die Funktionsfähigkeit der Meßeinrichtung und die Meßergebnisse von einer entfernten Stelle aus zu überprüfen. Weiterhin soll von einer entfernten Stelle aus in den Meßablauf und die Badpflegemaßnahmen eingegriffen werden können. Durch die angestrebte Fernkontrolle soll der personelle Aufwand für die Badkontrolle und die Badsteuerung der Reinigerbäder verringert werden.

Diese Aufgabe wird gelöst durch ein Verfahren zur automatischen Bestimmung der Alkalität eines oder mehrerer tensidhaltiger Reinigungsbäder durch Säure-Base-Reaktion mit einer Säure, wobei man programmgesteuert unter Verwendung einer geeigneten Meßeinrichtung
a) aus einem Reinigungsbad eine Probe mit einem vorgegebenen Volumen zieht,
b) erwünschtenfalls die Probe von Feststoffen befreit
c) auswählt, ob freie Alkalität und/oder Gesamtalkalität bestimmt werden soll,
d) die Probe durch Zugabe einer Säure titriert oder eine Säure vorlegt und diese mit der Probe titriert,
e) das Ergebnis der Titration ausgibt und/oder auf einem Datenträger speichert und/oder als Basis für weitere Auswertungen heranzieht.

Das im Teilschritt a) gezogene Probenvolumen kann dem Steuerteil der für das Verfahren einzusetzenden Meßeinrichtung fest einprogrammiert sein. Vorzugsweise ist die Größe des Probenvolumens von einem entfernten Ort aus änderbar. Weiterhin kann das Steuerprogramm so ausgelegt sein, daß es das zu verwendende Probevolumen von dem Ergebnis einer vorausgehenden Messung abhängig macht. Beispielsweise kann das Probenvolumen um so größer gewählt werden, je geringer die Alkalität des Reinigerbades ist. Die Genauigkeit der Alkalitätsbestimmung kann hierdurch optimiert werden.

Wenn im Sinne des erfindungsgemäßen Verfahrens von einem "entfernten Ort" die Rede ist, so ist damit ein Ort gemeint, der sich nicht im unmittelbaren oder zumindest im optischen Kontakt mit dem Reinigerbad befindet. Der entfernte Ort kann beispielsweise ein zentrales Prozeßleitsystem darstellen, das im Rahmen eines Gesamtverfahrens zur Oberflächenbehandlung der Metallteile als Teilaufgabe das Reinigerbad kontrolliert und steuert. Der "entfernte Ort" kann auch eine zentrale Leitwarte darstellen, von der aus der Gesamtprozeß kontrolliert und gesteuert wird und die sich beispielsweise in einem anderen Raum als das Reinigerbad befindet. Als "entfernter Ort" kommt jedoch auch eine Stelle außerhalb des Werkes in Betracht, in dem sich das Reinigerbad befindet. Hierdurch wird es möglich, daß Spezialisten das Reinigerbad überprüfen und steuern, die sich außerhalb des Werkes aufhalten, in dem sich das Reinigerbad befindet. Hierdurch ist es wesentlich seltener erforderlich, daß sich Spezialpersonal am Ort des Reinigerbades aufhält.

Geeignete Datenleitungen, mit denen sich die Ergebnisse der Alkalitätsbestimmungen sowie Steuerbefehle übertragen lassen, stehen im Stand der Technik zur Verfügung.

Zwischen dem Ziehen der Probe und der eigentlichen Messung kann es wünschenswert sein, die Probe im fakultativen Teilschritt b) von Feststoffen zu befreien. Bei einem nur wenig mit Feststoffen belasteten Reinigerbad ist dieses nicht erforderlich. Bei einem zu hohen Feststoffgehalt des Reinigerbades können jedoch Ventile der Meßeinrichtung verstopfen und Sensoren wie beispielsweise Elektroden verschmutzen. Daher ist es empfehlenswert, Feststoffe aus der Probe zu entfernen. Dies kann automatisch durch Filtration oder auch durch Verwendung eines Zyklons oder einer Zentrifuge erfolgen.

Im Teilschritt c) wird ausgewählt, ob die freie Alkalität und/oder die Gesamtalkalität bestimmt werden soll. Dies kann in den Programmablauf fest eingegeben werden. Beispielsweise können in einem Bestimmungszyklus sowohl die freie Alkalität als auch die Gesamtalkalität bestimmt werden. Das Programm kann jedoch auch entscheiden, einen dieser beiden Werte häufiger zu bestimmen als den anderen. Dies kann beispielsweise dann der Fall sein, wenn vorausgegangene Bestimmungen ergeben haben, daß sich einer der beiden Werte rascher ändert als der andere. Selbstverständlich kann die Wahl, ob freie Alkalität oder Gesamtalkalität bestimmt werden soll, auch durch eine externe Anforderung getroffen werden. Unter "externe Anforderung" wird hier und im folgenden verstanden, daß in den automatisierten Bestimmungsablauf entweder durch ein übergeordnetes Prozeßleitsystem oder manuell über Datenleitung eingegriffen werden kann.

Die Begriffe "freie Alkalität" und "Gesamtalkalität" sind nicht eindeutig definiert und werden von den verschiedenen Anwendern unterschiedlich gehandhabt. Beispielsweise kann man bestimmte pH-Werte definieren, bis zu denen titriert werden muß, um entweder die freie Alkalität oder die Gesamtalkalität zu bestimmen, beispielsweise pH = 8 für freie Alkalität, pH = 4,5 für Gesamtalkalität. Diese vorgewählten pH-Werte müssen in das Steuersystem für das automatische Bestimmungsverfahren eingegeben werden. Alternativ zu bestimmten pH-Werten kann man zur Festlegung der freien Alkalität und der Gesamtalkalität auch die Umschlagspunkte bestimmter Indikatoren wählen. Alternativ kann man Wendepunkte in der pH-Wertkurve auswählten und als Äquivalenzpunkte für die freie Alkalität oder die Gesamtalkalität definieren.

Zur eigentlichen Bestimmung der Alkalität im Teilschritt d) verwendet man die Säure-Base-Reaktion mit einer Säure. Vorzugsweise wählt man hierzu eine starke Säure. Dabei kann man entweder die Probe durch Zugabe einer Säure bis zu den vorgegebenen Kriterien für freie Alkalität oder Gesamtalkalität titrieren. Alternativ kann man die Säure vorlegen und diese mit der Probe titrieren.

Das Ergebnis der Titration wird anschließend ausgegeben und/oder auf einem Datenträger gespeichert (Teilschritt e)). Dabei kann sich der Datenträger am Ort der Bestimmung oder auch in einer entfernten Recheneinheit befinden. Unter "Ausgabe des Ergebnisses der Titration" wird verstanden, daß dieses entweder an ein übergeordnetes Prozeßleitsystem weitergegeben oder für einen Menschen erkennbar auf einem Bildschirm angezeigt oder ausgedruckt wird. Dabei kann der Ort der Anzeige bzw. Ausgabe des Ergebnisses der weiter oben definierte "entfernte Ort" sein. Es ist vorzuziehen, daß die Ergebnisse der einzelnen Bestimmungen zumindest für einen vorgegebenen Zeitintervall auf einem Datenträger gespeichert werden, so daß sie anschließend, beispielsweise im Sinne einer Qualitätssicherung, ausgewertet werden können. Die Ergebnisse der Alkalitätsbestimmungen müssen jedoch nicht unmittelbar als solche ausgegeben oder auf Datenträger gespeichert werden. Vielmehr können sie auch direkt als Basis für weitere Berechnungen herangezogen werden, wobei die Ergebnisse dieser weiteren Berechnungen angezeigt oder gespeichert werden. Beispielsweise kann anstelle des jeweils aktuellen Alkalitätswertes der Trend der Alkalitätswerte und/oder deren relative Änderung angezeigt werden. Oder die aktuellen Alkalitätswerte werden in "% des Sollgehalts" umgewandelt.

Im einfachsten Falle arbeitet das erfindungsgemäße Verfahren so, daß die Teilschritte a) bis e) nach einem vorgegebenen Zeitintervall wiederholt werden. Das vorgegebene Zeitintervall richtet sich dabei nach den Anforderungen des Betreibers des Reinigungsbades und kann jedes beliebige Zeitintervall im Bereich von etwa 5 Minuten bis zu mehreren Tagen umfassen. Für eine Qualitätssicherung ist es vorzuziehen, daß die vorgegebenen Zeitintervalle beispielsweise im Bereich zwischen 5 Minuten und 2 Stunden liegen. Beispielsweise kann man alle 15 Minuten eine Messung durchführen.

Das erfindungsgemäße Verfahren kann jedoch auch so durchgeführt werden, daß man die Schritte a) bis e) nach um so kürzeren Zeitintervallen wiederholt, je stärker sich die Ergebnisse zweier aufeinander folgender Bestimmungen unterscheiden. Das Steuersystem für das erfindungsgemäße Verfahren kann also selbst entscheiden, ob die Zeitintervalle zwischen den einzelnen Bestimmungen verkürzt oder verlängert werden sollen. Selbstverständlich muß dem Steuersystem die Anweisung vorgegeben werden, bei welchen Differenzen zwischen den Ergebnissen aufeinander folgender Bestimmungen welche Zeitintervalle gewählt werden sollen.

Weiterhin kann das erfindungsgemäße Verfahren so durchgeführt werden, daß die Teilschritte a) bis e) zu jedem beliebigen Zeitpunkt aufgrund einer externen Anforderung ausgeführt werden. Hierdurch kann beispielsweise eine sofortige Kontrolle des Alkalitätsgehalts des Reinigerbads vorgenommen werden, wenn in nachfolgenden Prozeßschritten Qualitätsprobleme festgestellt werden. Die Messung der Alkalität kann also zeitgesteuert (nach festen Zeitintervallen) oder ereignisgesteuert (bei festgestellten Änderungen oder durch äußere Anforderungen) erfolgen.

Vorzugsweise wird das erfindungsgemäße Verfahren so durchgeführt, daß sich die verwendete Meßeinrichtung selbst kontrolliert und erforderlichenfalls nachkalibriert. Hierzu kann vorgesehen werden, daß man nach einem vorgegebenen Zeitintervall oder nach einer vorgegebenen Anzahl von Bestimmungen oder aufgrund einer externen Anforderung durch Kontrollmessungen einer oder mehrerer Standardlösungen die Funktionsfähigkeit der verwendeten Meßeinrichtung überprüft. Zur Überprüfung wird eine Standardlösung mit bekannten Gehalten an freier und Gesamtalkalität titriert. Diese Überprüfung ist am realitätsnächsten, wenn man als Standardlösung eine Standardreinigerlösung einsetzt, deren Zusammensetzung der zu überprüfenden Reinigerlösung möglichst nahekommt. Vorzugsweise werden die Standardlösungen unter Luftausschluß oder unter Schutzgas (z.B. Stickstoff) gehalten.

Ein Kernpunkt bei der Überprüfung der Funktionsfähigkeit der Meßeinrichtung stellt die Kontrolle des verwendeten Sensors dar. Beispielsweise kann dieser eine pH-sensitive Elektrode, insbesondere eine Glaselektrode darstellen. Mit Hilfe einer Pufferlösung als Standardlösung läßt sich überprüfen, ob die Elektrode die erwartete Spannung liefert, ob sie in der erwarteten Zeit anspricht und ob ihre Steilheit (= Spannungsänderung als Funktion der pH-Änderung) im Sollbereich liegt. Ist dies nicht der Fall, gibt die Meßeinrichtung lokal oder vorzugsweise an einem entfernten Ort eine Alarmmeldung aus. Dabei kann die Alarmmeldung durch einen vom Steuerprogramm der Meßeinrichtung oder dem übergeordneten Prozeßleitsystem ausgewählten Vorschlag zum Eingreifen enthalten. Beispielsweise kann vorgeschlagen werden, daß die Elektrode zu reinigen oder auszutauschen ist.

Im erfindungsgemäßen Verfahren kann auch vorgesehen werden, daß man durch Kontrollmessung einer oder mehrerer Standardlösungen die Funktionsfähigkeit der verwendeten Meßeinrichtung überprüft, wenn die Ergebnisse zweier aufeinander folgender Messungen um einen vorgegebenen Betrag differieren. Hierdurch kann unterschieden werden, ob festgestellte Abweichungen in der Alkalität des Reinigerbades real sind und Badpflegemaßnahmen erfordern oder ob sie durch einen Fehler im Meßsystem vorgetäuscht werden.

Je nach Ergebnis der Überprüfung der verwendeten Meßeinrichtung kann man die zwischen der aktuellen und der vorhergehenden Kontrollmessung erfolgten Bestimmungen der Alkalität mit einem Statuskennzeichen versehen. das die Zuverlässigkeit dieser Bestimmungen der Alkalität kennzeichnet. Haben beispielsweise aufeinander folgende Kontrollmessungen zur Überprüfung der verwendeten Meßeinrichtung ergeben, daß diese korrekt arbeitet, können die Bestimmungen der Alkalität mit einem Statuskennzeichen "in Ordnung" versehen werden. Differieren die Ergebnisse der Kontrollmessungen um einen vorgegebenen Mindestbetrag, können beispielsweise die zwischenzeitlich erfolgten Bestimmungen der Alkalität mit dem Statuskennzeichen "zweifelhaft" versehen werden.

Weiterhin kann vorgesehen werden, daß man je nach Ergebnis der Überprüfung der verwendeten Meßeinrichtung mit der automatischen Bestimmung der Alkalität fortfährt und/oder eine oder mehrere der folgenden Aktionen durchführt: Analyse festgestellter Abweichungen, Korrektur der Meßeinrichtung, Beenden der Bestimmung der Alkalität, Senden einer Statusmeldung oder eines Alarmsignals an ein übergeordnetes Prozeßleitsystem oder eine Überwachungseinrichtung, also an einen entfernten Ort. Die Meßeinrichtung kann also, falls erwünscht, nach vorgegebenen Kriterien selbst entscheiden, ob sie soweit funktionsfähig ist, daß mit den Bestimmungen der Alkalität fortgefahren werden kann, oder ob Abweichungen festgestellt werden, die ein manuelles Eingreifen erforderlich machen.

Für die Verfolgung der Säure-Base-Reaktion der Reinigerlösung mit der zur Titration eingesetzten Säure sind verschiedene Sensoren geeignet. Nach dem derzeitigen Stand der Technik wird man vorzugsweise eine pH-sensitive Elektrode wie beispielsweise eine Glaselektrode einsetzen. Diese liefert ein pH-abhängiges Spannungssignal, das weiter ausgewertet werden kann. Die Verwendung einer derartigen Elektrode ist apparativ besonders einfach und daher bevorzugt.

Zur Verfolgung der Säure-Base-Reaktion des Teilschritts d) kann jedoch auch ein Indikator eingesetzt werden, dessen pH-abhängige Wechselwirkung mit elektromagnetischer Strahlung gemessen wird. Beispielsweise kann dieser Indikator ein klassischer Farbindikator sein, dessen Farbumschlag fotometrisch vermessen wird. Alternativ hierzu kann ein optischer Sensor verwendet werden. Hierbei handelt es sich beispielsweise um eine Schicht eines anorganischen oder organischen Polymers mit einem fixierten Farbstoff, der bei einem bestimmten pH-Wert seine Farbe ändert. Der Farbumschlag beruht wie bei einem klassischen Farbindikator darauf, daß Wasserstoffionen oder Hydroxidionen, die in die Schicht diffundieren können, mit den Farbstoffmolekülen reagieren. Die Änderung der optischen Eigenschaften der Schicht kann fotometrisch bestimmt werden. Alternativ hierzu kann man Filme wie beispielsweise organische Polymere einsetzen. deren Brechungsindex sich als Funktion des pH-Wertes ändert. Überzieht man beispielsweise einen Lichtleiter mit einem derartigen Polymer, so kann erreicht werden, daß auf der einen Seite eines Schwellwerts für den Brechungsindex im Lichtleiter Totalreflexion eintritt, so daß ein Lichtstrahl weitergeleitet wird. Auf der anderen Seite des Schwellwerts des Brechungsindexes tritt jedoch keine Totalreflexion mehr ein, so daß der Lichtstrahl den Lichtleiter verläßt. Am Ende des Lichtleiters kann dann detektiert werden, ob das Licht durch den Lichtleiter fortgepflanzt wird oder nicht. Eine derartige Einrichtung ist als "Optrode" bekannt.

Weiterhin können als Sensoren anorganische oder organische Festkörper eingesetzt werden, deren elektrische Eigenschaften sich mit dem pH-Wert der umgebenden Lösung ändern. Beispielsweise kann ein Ionenleiter eingesetzt werden, dessen Leitfähigkeit von der Konzentration der H⁺- oder OH⁻-Ionen abhängt. Durch Messung der Gleich- oder Wechselstromleitfähigkeit des Sensors kann dann auf den pH-Wert des umgebenden Mediums geschlossen werden.

Vorzugsweise ist das im erfindungsgemäßen Verfahren eingesetzte Meßsystem so ausgelegt, daß es die Füllstände und/oder den Verbrauch der verwendeten Reagenzien (Säuren, Standard- und Testlösungen, evtl. Hilfslösungen) automatisch überwacht und bei Unterschreiten eines vorgegebenen Mindestfüllstandes eine Warnmeldung ausgibt. Hierdurch kann vermieden werden, daß die Meßeinrichtung dadurch funktionsunfähig wird, daß ihr die erforderlichen Chemikalien fehlen. Die Überwachung der Füllstände kann mit bekannten Methoden erfolgen. Beispielsweise können die Gefäße mit den Chemikalien auf einer Waage stehen, die das jeweilige Gewicht der Chemikalien registriert. Oder man setzt einen Schwimmer ein. Alternativ kann ein Mindestfüllstand durch eine Leitfähigkeitselektrode überprüft werden, die in das Gefäß mit der Chemikalie eintaucht. Die von der Meßeinrichtung auszugebende Warnmeldung wird vorzugsweise an den entfernten Ort übertragen, so daß von dort aus die entsprechenden Maßnahmen eingeleitet werden können. Generell ist in dem erfindungsgemäßen Verfahren vorzugsweise vorgesehen, daß man die Ergebnisse der Bestimmungen und/oder der Kontrollmessungen und/oder der Kalibrierungen und/oder die Statussignale kontinuierlich oder in vorgegebenen Zeitabständen und/oder auf Anforderung an einen entfernten Ort überträgt. Hierdurch ist Kontrollpersonal, das sich nicht am Ort des Reinigerbades befinden muß. laufend über dessen aktuellen Alkalitätsgehalt informiert. Je nach Ergebnis der Bestimmungen und der Kontrollmessungen können entweder automatisch über ein Prozeßleitsystem oder durch manuelles Eingreifen erforderliche Korrekturmaßnahmen getroffen werden.

Die einfachste Korrekturmaßnahme besteht darin, daß man bei Unterschreiten eines vorgegebenen Mindestwertes der Alkalität (freie und/oder Gesamtalkalität) oder auf externe Anforderung eine Einrichtung aktiviert, die eine oder mehrere Ergänzungskomponenten (Lösung oder Pulver) in das Reinigungsbad dosiert. Dies kann beispielsweise derart automatisiert erfolgen, daß je nach ermitteltem Alkalitätsgehalt eine bestimmte Menge Ergänzungslösung oder Ergänzungspulver dem Reinigungsbad zugeführt wird. Hierbei können die Größe der Zugabeportion selbst oder bei fest vorgegebenen Zugabeportionen die Zeitintervalle zwischen den einzelnen Zugaben variiert werden. Dies kann beispielsweise über Dosierpumpen oder auch gewichtsgesteuert erfolgen. Im erfindungsgemäßen Verfahren ist also zum einen vorgesehen, daß bei bestimmten Abweichungen vom Sollwert (insbesondere, wenn durch die Kontrollmessungen die Funktionsfähigkeit der Meßeinrichtung feststeht) eine bestimmte Menge Ergänzungskomponente in das Reinigungsbad nachdosiert wird. Zum anderen kann dieses Nachdosieren jedoch auch aufgrund einer externen Anforderung, beispielsweise von einem entfernten Ort aus, unabhängig von dem aktuellen Gehalt an Alkalität vorgenommen werden.

In einer weiteren Ausführungsform der Erfindung ergänzt man das Reinigungsbad durchsatzabhängig mit einer vorgegebenen Menge Ergänzungskomponente pro durchgesetzter Einheit (Grunddosierung). Beispielsweise kann man bei einem Reinigungsbad für Automobilkarossen festlegen, welche Menge Ergänzungskomponente pro gereinigter Karosse zugegeben wird. Die erfindungsgemäße Kontrolle der Alkalität dient dann dazu, den Erfolg dieser vorgegebenen Zugabe zu kontrollieren und zu dokumentieren sowie durch zusätzliche ergebnisabhängige Feindosierung (zusätzliche Dosierung bei Unterschreiten der Sollwerte, Aussetzen mit der Grunddosierung bei Überschreiten der Sollwerte) eine konstantere Betriebsweise des Reinigungsbades zu erreichen. Qualitätsschwan-kungen werden hierdurch verringert.

Selbstverständlich setzt das erfindungsgemäße Verfahren voraus, daß man die entsprechende Einrichtung zur Verfügung stellt. Diese enthält eine Steuerung, vorzugsweise eine Rechnersteuerung, die zeit- und/oder ereignisabhängig den Meßverlauf steuert. Sie muß weiterhin die erforderlichen Reagenziengefäße, Rohrleitungen, Ventile, Dosier- und Meßeinrichtungen etc. zur Steuerung und Messung der Probenströme enthalten. Die Materialien sollen dem Verwendungszweck angepaßt sein, beispielsweise aus Edelstahl und/oder aus Kunststoff bestehen. Die Steuerelektronik der Meßeinrichtung sollte eine entsprechende input-output-Schnittstelle aufweisen, um mit einem entfernten Ort kommunizieren zu können.

Das erfindungsgemäße Verfahren ermöglicht es, zum einen die Alkalität von Reinigungsbädern vor Ort zu überprüfen und ohne manuellen Eingriff vorgegebene Korrekturmaßnahmen einzuleiten. Hierdurch wird die Prozeßsicherheit erhöht und ein konstant zuverlässiges Reinigungsergebnis erzielt. Abweichungen von den Sollwerten können frühzeitig erkannt und automatisch oder manuell korrigiert werden, bevor das Reinigungsergebnis verschlechtert wird. Zum anderen werden die Meßdaten vorzugsweise an einen entfernten Ort übertragen, so daß Bedienungsoder Aufsichtspersonal auch dann laufend über den Zustand des Reinigungsbades informiert ist, wenn es sich nicht in dessen unmittelbarer Nähe befindet. Der Personalaufwand für Kontrolle und Steuerung des Reinigungsbades kann hierdurch beträchtlich reduziert werden. Durch die Dokumentation der im erfindungsgemäßen Verfahren erhobenen Daten werden den Anforderungen einer modernen Qualitätssicherung Rechnung getragen. Der Chemikalienverbrauch kann dokumentiert und optimiert werden.

## Patentansprüche

1. Verfahren zur automatischen Bestimmung der Alkalität eines oder mehrerer tensidhaltiger Reinigungsbäder durch Säure-Base-Reaktion mit einer Säure, wobei man programmgesteuert unter Verwendung einer geeigneten Meßeinrichtung
a) aus einem Reinigungsbad eine Probe mit einem vorgegebenen Volumen zieht,
b) erwünschtenfalls die Probe von Feststoffen befreit
c) auswählt, ob freie Alkalität und/oder Gesamtalkalität bestimmt werden soll,
d) die Probe durch Zugabe einer Säure titriert oder eine Säure vorlegt und diese mit der Probe titriert,
e) das Ergebnis der Titration ausgibt und/oder auf einem Datenträger speichert und/oder als Basis für weitere Auswertungen heranzieht und bei Unterschreiten eines vorgegebenen Mindestwertes der Alkalität oder auf Anforderung eine Einrichtung aktiviert, die eine oder mehrere Ergänzungskomponenten in des Reinigungsbad dosiert.

2. Verfahren nach Anspruch 1, **dadurch gekennzeichnet, daß** man die Teilschritte a) bis e) nach einem vorgegebenen Zeitintervall wiederholt.

3. Verfahren nach Anspruch 1, **dadurch gekennzeichnet, daß** man die Teilschritte a) bis e) nach um so kürzeren Zeitintervallen wiederholt, je stärker sich die Ergebnisse zweier aufeinanderfolgender Bestimmungen unterscheiden.

4. Verfahren nach Anspruch 1, **dadurch gekennzeichnet, daß** man die Teilschritte a) bis e) aufgrund einer externen Anforderung ausführt.

5. Verfahren nach einem oder mehreren der Ansprüche 1 bis 4, **dadurch gekennzeichnet, daß** man nach einem vorgegebenen Zeitintervall oder nach einer vorgegebenen Anzahl von Bestimmungen oder aufgrund einer externen Anforderung durch Kontrollmessung einer oder mehrerer Standardlösungen die Funktionsfähigkeit der verwendeten Meßeinrichtung überprüft.

6. Verfahren nach einem oder mehreren der Ansprüche 1 bis 4, **dadurch gekennzeichnet, daß** man durch Kontrollmessung einer oder mehrerer Standardlösungen die Funktionsfähigkeit der verwendeten Meßeinrichtung überprüft, wenn die Ergebnisse zweier aufeinanderfolgender Bestimmungen um einen vorgegebenen Betrag differieren.

7. Verfahren nach einem oder beiden der Ansprüche 5 und 6, **dadurch gekennzeichnet, daß** man je nach Ergebnis der Überprüfung der verwendeten Meßeinrichtung die zwischen der aktuellen und der vorhergehenden Kontrollmessung erfolgten Bestimmungen der Alkalität mit einem Statuskennzeichen versieht, das die Zuverlässigkeit dieser Bestimmungen der Alkalität kennzeichnet.

8. Verfahren nach einem oder beiden der Ansprüche 5 und 6, **dadurch gekennzeichnet, daß** man je nach Ergebnis der Überprüfung der verwendeten Meßeinrichtung mit der automatischen Bestimmung der Alkalität fortfährt und/oder eine oder mehrere der folgenden Aktionen durchführt: Analyse festgestellter Abweichungen, Korrektur der Meßeinrichtung, Beenden der Bestimmungen der Alkalität, Senden einer Statusmeldung oder eines Alarmsignals an ein übergeordnetes Prozeßleitsystem oder an eine Überwachungseinrichtung.

9. Verfahren nach einem oder mehreren der Ansprüche 1 bis 8, **dadurch gekennzeichnet, daß** man bei der Durchführung des Teilschritts d) eine pH-sensitive Elektrode einsetzt.

10. Verfahren nach einem oder mehreren der Ansprüche 1 bis 8, **dadurch gekennzeichnet, daß** man bei der Durchführung des Teilschritts d) einen Indikator einsetzt, dessen pH-abhängige Wechselwirkung mit elektromagnetischer Strahlung gemessen wird.

11. Verfahren nach einem oder mehreren der Ansprüche 1 bis 8, **dadurch gekennzeichnet, daß** man bei der Durchführung des Teilschritts d) eine Substanz verwendet, deren Farbe und/oder Brechungsindex und/oder elektrische Leitfähigkeit sich mit dem pH-Wert der umgebenden Lösung ändert.

12. Verfahren nach einem oder mehreren der Ansprüche 1 bis 11, **dadurch gekennzeichnet, daß** man die Füllstände der verwendeten Reagenzien automatisch überwacht und bei Unterschreiten eines vorgegebenen Mindestfüllstandes eine Warnmeldung ausgibt.

13. Verfahren nach einem oder mehreren der Ansprüche 1 bis 12, **dadurch gekennzeichnet, daß** man die Ergebnisse der Bestimmungen und/oder der Kontrollmessungen und/oder der Kalibrierungen und/oder die Statussignale kontinuierlich oder in vorgegebenen Zeitabständen und/oder auf Anforderung an einen von dem Ort der Bestimmung unterschiedlichen Ort überträgt.

## Claims

1. A process for automatically determining the alkalinity of one or more surfactant-containing cleaning baths by acid-base reaction with an acid, **characterized in that**, using a suitable program-controlled measuring arrangement,
a) a sample of predetermined volume is taken from a cleaning bath,
b) if desired, the sample is freed from solids,
c) a choice is made whether to determine free alkalinity and/or total alkalinity,
d) the sample is titrated by addition of an acid or an acid is introduced and titrated with the sample,
e) the titration result is printed out and/or stored on a data carrier and/or used as a basis for further evaluations and, if the alkalinity falls below a predetermined minimum value or as on demand, a device is activated to introduce one or more replenishing components into the cleaning bath.

2. A process as claimed in claim 1, **characterized in that** steps a) to e) are repeated after a predetermined time interval.

3. A process as claimed in claim 1, **characterized in that** steps a) to e) are repeated after time intervals which are shorter, the greater the difference between the results of two successive determinations.

4. A process as claimed in claim 1, **characterized in that** steps a) to e) are carried out in response to an external demand.

5. A process as claimed in one or more of claims 1 to 4, **characterized in that**, after a predetermined time interval or after a predetermined number of determinations or in response to an external demand, the measuring arrangement used is performance-tested by control measurement of one or more standard solutions.

6. A process as claimed in one or more of claims 1 to 4, **characterized in that** the measuring arrangement used is performance-tested by control measurement of one or more standard solutions when the results of two successive determinations differ by a predetermined amount.

7. A process as claimed in one or both of claims 5 and 6, **characterized in that**, depending on the performance-testing results of the measuring arrangement used, the alkalinity determinations carried out between the current control measurement and the preceding control measurement are provided with a status code which indicates the reliability of those alkalinity determinations.

8. A process as claimed in one or both of claims 5 and 6, **characterized in that**, depending on the performance-testing results of the measuring arrangement used, the automatic alkalinity determination is continued and/or one or more of the following actions is carried out: analysis of any deviations detected, correction of the measuring arrangement, termination of the alkalinity determinations, transmission of a status signal or an alarm signal to a master process control system or to a monitoring system.

9. A process as claimed in one or more of claims 1 to 8, **characterized in that** a pH-sensitive electrode is used to carry out step d).

10. A process as claimed in one or more of claims 1 to 8, **characterized in that** step d) is carried out using an indicator of which the pH-dependent interaction with electromagnetic radiation is measured.

11. A process as claimed in one or more of claims 1 to 8, **characterized in that** step d) is carried out using a substance of which the color and/or refractive index and/or electrical conductivity changes with the pH value of the surrounding solution.

12. A process as claimed in one or more of claims 1 to 11, **characterized in that** the filling levels of the reagents used are automatically monitored and, whenever the filling level falls below a predetermined minimum level, a warning signal is released.

13. A process as claimed in one or more of claims 1 to 12, **characterized in that** the results of the determinations and/or the control measurements and/or the calibrations and/or the status signals are transmitted to a location different from the point of determination either continuously or at predetermined time intervals and/or on demand.

## Revendications

1. Procédé pour la détermination automatique de l'alcalinité d'un ou plusieurs bains de nettoyage contenant des tensioactifs, par une réaction acide-base avec un acide, dans lequel, dans une régulation programmée avec utilisation d'un dispositif de mesure approprié,
a) on prélève d'un bain de nettoyage un échantillon d'un volume pré-établi,
b) si on le désire, on sépare l'échantillon de matières solides,
c) on choisit si l'alcalinité libre et/ou l'alcalinité totale doit(doivent) être déterminée(s),
d) on titre l'échantillon par addition d'un acide ou on dispose au préalable un acide et on le titre avec l'échantillon,
c) le résultat du titrage est émis et/ou enregistré sur un support de données et/ou utilisé comme base pour d'autres évaluations.
et, dans le cas d'un dépassement vers le bas d'une valeur minimale préétablie de l'alcalinité ou à la demande, est activé un dispositif qui introduit de façon réglée un ou plusieurs composants de complément dans le bain de nettoyage.

2. Procédé selon la revendication 1,
**caractérisé en ce qu'**
on répète les étapes partielles a) à e) après un intervalle de temps préétabli.

3. Procédé selon la revendication 1,
**caractérisé en ce qu'**
on répète les étapes partielles a) à e) après des intervalles de temps d'autant plus courts que les différences des résultats de deux déterminations successives sont plus grandes.

4. Procédé selon la revendication 1,
**caractérisé en ce que**
les étapes partielles a) à e) sont effectuées en raison d'une demande externe.

5. Procédé selon une ou plusieurs des revendications 1 à 4,
**caractérisé en ce qu'**
après un intervalle de temps préétabli ou après un nombre préétabli de déterminations ou en raison d'une demande externe, on contrôle le bon fonctionnement du dispositif de mesure utilisé par dosage de contrôle d'une ou plusieurs solutions de référence.

6. Procédé selon une ou plusieurs des revendications 1 à 4,
**caractérisé en ce qu'**
on contrôle le bon fonctionnement du dispositif de mesure utilisé, par dosage de contrôle d'une ou plusieurs solutions de référence, lorsque les résultats de deux déterminations successives diffèrent par une valeur préétablie.

7. Procédé selon l'une des revendications 5 et 6 ou les deux,
**caractérisé en ce que**
selon le résultat du contrôle du dispositif de mesure utilisé, on munit les déterminations, effectuées entre le dosage de contrôle actuel et le dosage de contrôle précédent, d'un signe distinctif d'état qui caractérise la fiabilité de ces déterminations de l'alcalinité.

8. Procédé selon l'une des revendications 5 et 6 ou les deux,
**caractérisé en ce que**
selon le résultat du contrôle du dispositif de mesure utilisé, on poursuit la détermination automatique de l'alcalinité et/ou on effectue une ou plusieurs des actions suivantes: analyse de variations constatées, correction du dispositif de mesure, interruption des déterminations de l'alcalinité, envoi d'un message d'état ou d'un message d'alarme à un système central directeur du processus ou à un dispositif de surveillance.

9. Procédé selon une ou plusieurs des revendications 1 à 8,
**caractérisé en ce que**
dans la mise en oeuvre de l'étape partielle d), on utilise une électrode sensible au pH.

10. Procédé selon une ou plusieurs des revendications 1 à 8,
**caractérisé en ce que**
dans la mise en oeuvre de l'étape partielle d), on utilise un indicateur dont la variation en fonction du pH est mesurée au moyen d'un rayonnement électromagnétique.

11. Procédé selon une ou plusieurs des revendications 1 à 8,
**caractérisé en ce que**
dans la mise en oeuvre de l'étape partielle d), on utilise une substance dont la couleur et/ou l'indice de réfraction et/ou la conductivité électrique se modifient avec le pH de la solution environnante.

12. Procédé selon une ou plusieurs des revendications 1 à 11,
**caractérisé en ce qu'**
on surveille automatiquement les étapes de remplissage des réactifs utilisés, et un message d'alarme est émis dans le cas d'un dépassement vers le bas d'un état de remplissage minimum préétabli.

13. Procédé selon une ou plusieurs des revendications 1 à 12,
**caractérisé en ce qu'**
on transmet à un lieu différent du lieu de la détermination les résultats des déterminations et/ou des dosages de contrôle et/ou des étalonnages et/ou les signaux d'état, en continu ou à intervalles de temps préétablis et/ou à la demande.
